# EUROPEAN PATENT APPLICATION

(11) **EP 4 629 408 A1**
(43) Date of publication of application: **08.10.2025**
(21) Application number: 24750519.1
(22) Date of filing: 29.01.2024
(51) Int. Cl.: H01M 50/126, H01M 50/131, H01M 50/105, H01M 50/121, H01M 50/119

(54) **POUCH FILM LAMINATE AND SECONDARY BATTERY**

(30) Priority: 01.02.2023 KR 20230013848
(71) Applicant: LG Energy Solution, Ltd., Seoul 07335 (KR)
(72) Inventor: SONG, Dae Woong, Daejeon 34122 (KR); HWANG, Soo Ji, Daejeon 34122 (KR); KANG, Min Hyeong, Daejeon 34122 (KR); SHIN, Ji Hyun, Daejeon 34122 (KR); KIM, Gi Woung, Daejeon 34122 (KR)
(74) Representative: Plasseraud IP
(86) International application number: PCT/KR2024/001358
(87) International publication number: WO 2024/162721

(57) **Abstract**

A pouch film laminate according to the present invention includes a base material layer, a gas barrier layer, a first sealant layer, and a second sealant layer which are sequentially laminated, wherein an elastic modulus of the first sealant layer is greater than an elastic modulus of the second sealant layer.

## Description

### TECHNICAL FIELD

### Cross-reference to Related Applications

This application claims priority from Korean Patent Application No. 10-2023-0013848, filed on February 1, 2023, the disclosure of which is incorporated by reference herein.

### Technical Field

The present invention relates to a pouch film laminate and a pouch type secondary battery which is prepared by forming the pouch film laminate.

### BACKGROUND ART

Secondary batteries have been used in various fields, including not only small products such as digital cameras, P-DVDs, MP3Ps, mobile phones, PDAs, portable game devices, power tools, and E-bikes, but also large products requiring high output, such as electric vehicles and hybrid vehicles, and a power storage device and a power storage device for backup which store surplus generated power or renewable energy. Types of the secondary batteries include a nickel cadmium battery, a nickel hydride battery, a lithium ion battery, and a lithium ion polymer battery.

The secondary battery may be prepared by accommodating an electrode assembly, in which a positive electrode, a negative electrode, and a separator disposed therebetween are alternatingly stacked, in a battery case, injecting an electrolyte, and then sealing the battery case. The secondary battery is classified into a pouch type, a can type, and the like, according to a material of a case for accommodating the electrode assembly.

After a cup portion is formed by press working of a flexible pouch film laminate, a pouch type secondary battery may be prepared by accommodating the electrode assembly in an accommodation space inside the cup portion and sealing a sealing portion. The pouch film laminate is composed of a plurality of layers in which a polymer film, such as polyethylene terephthalate, is laminated on one surface of a metal gas barrier layer and a sealant layer using a thermoplastic polyolefin-based resin is laminated on the other surface thereof. When the pouch type battery case is sealed, the sealant layers may be thermally bonded to each other to form the sealing portion.

Recently, an amount of gas generated in a pouch during charge and discharge of the battery is increasing as capacity of the pouch type secondary battery is increased. If internal pressure of the pouch is increased above a certain level due to an increase in the gas generation amount, there is a problem in that durability and safety of the battery are reduced because the sealing portion of the pouch type secondary battery is vented. Thus, there is a need to develop a pouch type secondary battery having high sealing strength so as to prevent venting even at high internal pressure.

### DISCLOSURE OF THE INVENTION

### TECHNICAL PROBLEM

An aspect of the present invention provides a pouch film laminate capable of improving sealing strength of a pouch by optimizing an elastic modulus of a sealant layer, and a pouch type battery case and a pouch type secondary battery which are prepared by forming the pouch film laminate.

### TECHNICAL SOLUTION

According to an embodiment of the present invention, there is provided a pouch film laminate including: a base material layer, a gas barrier layer, a first sealant layer, and a second sealant layer which are sequentially laminated, wherein an elastic modulus of the first sealant layer is greater than an elastic modulus of the second sealant layer.

According to the present invention, a ratio (B/A) of the elastic modulus (B) of the second sealant layer to the elastic modulus (A) of the first sealant layer may be in a range of 0.65 or more to less than 1.0.

Also, the elastic modulus of the first sealant layer may be 600 MPa or less, and the elastic modulus of the second sealant layer may be 200 MPa or more.

According to the present invention, the first sealant layer may be in direct contact with the gas barrier layer.

In one example, the second sealant layer may be in direct contact with the first sealant layer. In another example, the pouch film laminate may further include at least one layer disposed between the first sealant layer and the second sealant layer.

The first sealant layer according to the present invention may have a thickness of 10 µm to 90 µm, and the second sealant layer may have a thickness of 10 µm to 90 µm.

The first sealant layer according to the present invention may include acid modified polypropylene (PPa), and the second sealant layer may include polypropylene (PP).

The gas barrier layer according to the present invention may have a thickness of 30 µm to 100 µm, and the gas barrier layer may include aluminum.

According to another embodiment of the present invention, there is provided a pouch type battery case which is prepared by forming the above-described pouch film laminate.

According to another embodiment of the present invention, there is provided a pouch type secondary battery including: a pouch type battery case prepared by forming the above-described pouch film laminate, and an electrode assembly accommodated in the pouch type battery case.

### ADVANTAGEOUS EFFECTS

Since an elastic modulus of a first sealant layer is adjusted to be greater than an elastic modulus of a second sealant layer, deformation due to tensile stress is distributed to the second sealant layer rather than concentrated in the first sealant layer when the tensile stress is applied to a sealing portion of a pouch type battery case prepared from a pouch film laminate, and thus, the present invention may achieve higher sealing strength than a conventional case. As a result, durability and safety of a battery may be improved by suppressing venting of a pouch even in an environment where internal pressure is increased due to gas generation in the pouch during charge and discharge of the pouch type secondary battery.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIG. 1 is a cross-sectional view of a pouch film laminate according to the present invention.
FIG. 2 is an exploded assembly view of a pouch type secondary battery according to the present invention.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

The description of "A and/or B" in this specification means A, or B, or A and B.

In this specification, the expression "%" denotes wt% unless explicitly stated otherwise.

### Pouch Film Laminate

A pouch film laminate according to the present invention includes a base material layer, a gas barrier layer, a first sealant layer, and a second sealant layer which are sequentially laminated, wherein an elastic modulus of the first sealant layer is greater than an elastic modulus of the second sealant layer.

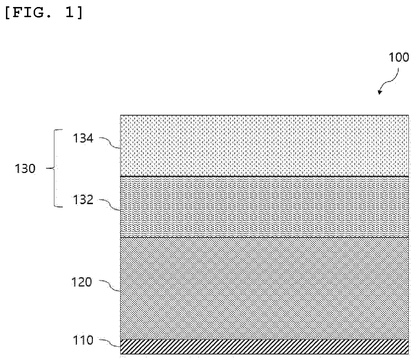

FIG. 1 is a cross-sectional view of a pouch film laminate 100 according to the present invention. Hereinafter, each configuration of the pouch film laminate 100 of the present invention will be described in more detail with reference to FIG. 1.

### (1) Base Material Layer

A base material layer 110 is formed as an outermost layer of the pouch film laminate 100 to protect a secondary battery from friction and collision with the outside. The base material layer 110 is formed of a polymer such that it may electrically insulate an electrode assembly from the outside.

The base material layer 110 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon. Among them, it is desirable that the base material layer 110 is formed of polyethylene terephthalate (PET), Nylon, or a combination thereof, which has wear resistance and heat resistance.

The base material layer 110 may have a thickness of 5 µm to 100 µm, particularly 7 µm to 70 µm, and more particularly 10 µm to 60 µm. In a case in which the thickness of the base material layer 110 satisfies the above range, since external insulation is excellent and an entire pouch is not thick, energy density to volume of the secondary battery may be excellent.

The base material layer 110 may have a single-layer structure formed of any one material. Alternatively, the base material layer 110 may have a composite layer structure which is formed by layering two or more materials, respectively. An adhesive layer may be disposed between the respective layers in the composite layer structure.

Specifically, the base material layer 110 according to the present invention may include a first base material layer (not shown) and a second base material layer (not shown). In this case, the first base material layer may be a layer disposed as the outermost layer of the pouch film laminate, and the second base material layer may be a layer disposed between the first base material layer and a gas barrier layer 120. The first base material layer and the second base material layer may be formed of materials with different materials and/or physical properties, respectively. An interface may exist between the first base material layer and the second base material layer. This means that the first base material layer and the second base material layer are different layers from each other and may be formed separately.

The first base material layer may play a role in preventing moisture penetration from the outside of the pouch. The first base material layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon. Preferably, the first base material layer may include a polyester-based film having wear resistance and heat resistance. For example, the first base material layer may include at least one selected from the group consisting of polyethylene terephthalate, polybutylene terephthalate, and polyethylene naphthalate, but is not limited thereto. The first base material layer may have a thickness of 10 µm to 50 µm, particularly 10 µm to 40 µm, and more particularly 12 µm to 25 µm. In a case in which the thickness of the first base material layer satisfies the above numerical range, moisture penetration into the inside of the pouch film laminate may be effectively suppressed while insulation properties and formability of the pouch are ensured. Also, since the entire pouch is not thick, the energy density to volume of the secondary battery is excellent.

The second base material layer may play a role in improving the formability of the pouch. The second base material layer may include a polyamide-based film. For example, the second base material layer may include at least one selected from the group consisting of Nylon 6, Nylon 6, 6, Nylon MXD6 (polyxylylene adipamide), Nylon 4, Nylon 4, 6, and Nylon 4,10, but is not limited thereto. Preferably, the second base material layer may include Nylon 6, and, in this case, there is an advantage in that the formability of the pouch may be improved due to excellent elongation properties of the Nylon 6. The second base material layer may have a thickness of 10 µm to 50 µm, particularly 10 µm to 40 µm, and more particularly 15 µm to 35 µm. In a case in which the thickness of the second base material layer satisfies the above numerical range, a decrease in the energy density to volume of the secondary battery due to an excessive increase in thickness of the pouch film laminate may be prevented while the formability of the pouch is ensured.

The second base material layer may include metal oxide particles. The metal oxide particles may remove moisture in the second base material layer by being hydroxylated through a reaction with the moisture introduced into the second base material layer. The metal oxide particles may include at least one selected from the group consisting of CaO, MnO, SrO, MgO, and ZnO. Preferably, the metal oxide particles may include at least one of CaO and MgO which are advantageous for hydroxylation with water.

### (2) Gas Barrier Layer

The gas barrier layer 120 is laminated between the base material layer 110 and a sealant layer 130 to secure mechanical strength of the pouch, block incoming and outgoing of gas or moisture from the outside of the secondary battery, and prevent leakage of an electrolyte from the inside of a pouch type battery case.

The gas barrier layer 120 may be formed of metal. For example, the gas barrier layer may be a metal thin film including at least one metal selected from the group consisting of aluminum (Al), copper (Cu), stainless steel (SUS), nickel (Ni), titanium (Ti), and INVAR, but is not limited thereto.

According to an embodiment of the present invention, the gas barrier layer 120 may be formed of an aluminum alloy thin film. In a case in which the gas barrier layer 120 is formed by using the aluminum alloy thin film, the gas barrier layer 120 is light-weighted while securing more than a predetermined level of mechanical strength, may compensate for electrochemical properties by the electrode assembly and the electrolyte, and may secure a heat dissipation property. An element other than aluminum (Al) may be included in the aluminum alloy thin film. For example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

In another example, the gas barrier layer 120 may be formed of a stainless steel thin film. Specifically, the gas barrier layer 120 may be prepared by forming and/or processing the stainless steel thin film. Since the gas barrier layer 120 formed of stainless steel has relatively low thermal conductivity, it is effective in preventing or delaying heat diffusion to other cells during thermal runaway, and, since it has relatively high toughness, it may suppress generation of cracks in the pouch during use of a pouch type battery. An element other than iron (Fe), for example, at least one selected from the group consisting of copper (Cu), chromium (Cr), manganese (Mn), nickel (Ni), magnesium (Mg), silicon (Si), and zinc (Zn) may be included in the stainless steel.

The gas barrier layer 120 may have a thickness of 30 µm to 100 µm, particularly 30 µm to 90 µm, and more particularly 40 µm to 80 µm. In a case in which the thickness of the gas barrier layer 120 satisfies the above range, gas barrier performance and formability when forming a cup portion are excellent.

### (3) Sealant Layer

The sealant layer 130 is for completely sealing the inside of the pouch type battery case by being thermally bonded to each other at a sealing portion when the pouch type battery case accommodating the electrode assembly inside is sealed. For this purpose, the sealant layer 130 may be formed of a material having excellent thermal adhesive strength.

The sealant layer 130 may be formed of a material having insulation properties, corrosion resistance, and sealing properties. Specifically, since the sealant layer 130 is in direct contact with the electrode assembly and/or the electrolyte inside the pouch type battery case, it may be formed of a material having insulation properties and corrosion resistance. Also, since the sealant layer 130 completely seals the inside of the pouch type battery case to block material movement between the inside/the outside, it may be formed of a material having high sealing properties (e.g., excellent thermal adhesive strength). To ensure such insulation properties, corrosion resistance, and sealing properties, the sealant layer 130 may be formed of a polymer material.

The sealant layer 130 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon, and may preferably be formed of a polyolefin-based resin such as polypropylene (PP) and/or polyethylene (PE). In this case, the polypropylene (PP) may be composed of cast polypropylene (CPP), acid modified polypropylene (PPa), a polypropylene-ethylene copolymer, and/or a polypropylene-butylene-ethylene terpolymer.

The sealant layer 130 may have a thickness of 30 µm to 130 µm, particularly 50 µm to 120 µm, and more particularly 70 µm to 100 µm. In a case in which the thickness of the sealant layer satisfies the above range, there is an effect of securing formability of the pouch film laminate while securing sealing strength of the sealing portion.

The sealant layer 130 according to the present invention may have a composite layer structure which is formed by layering two or more materials, respectively. For example, the sealant layer 130 may have a multilayer structure. An adhesive layer and/or a skin layer may be disposed between the respective layers of the sealant layer 130 having the composite layer structure. Since the adhesive layer and/or the skin layer have heat adhesiveness, the adhesive layer and/or the skin layer may play a role in assisting adhesion between the respective layers of the sealant layer 130. For example, the adhesive layer and/or the skin layer may include a polypropylene-based resin, but are not limited thereto. Also, the adhesive layer and/or the skin layer may be disposed between the sealant layer 130 and the gas barrier layer 120.

Specifically, the sealant layer 130 according to the present invention includes a first sealant layer 132 and a second sealant layer 134. For example, the sealant layer 130 may be composed of the first sealant layer 132 and the second sealant layer 134. As another example, the sealant layer 130 may further include a third sealant layer and/or a fourth sealant layer in addition to the first sealant layer 132 and the second sealant layer 134. Respective layers of the sealant layer 130 including the first sealant layer 132 and the second sealant layer 134 may be formed of materials with different materials and/or physical properties, respectively. An interface may exist between the respective layers included in the sealant layer 130. This means that the respective layers are different layers from each other and may be formed separately.

According to the present invention, an elastic modulus of the first sealant layer 132 is greater than an elastic modulus of the second sealant layer 134. In a case in which the elastic modulus of the first sealant layer 132 is smaller than the elastic modulus of the second sealant layer 134, deformation may be concentrated in the first sealant layer 132 adjacent to the gas barrier layer 120 when tensile stress is applied to the sealing portion of the pouch type battery case prepared from the pouch film laminate. As a result, since delamination occurs at an interface between the gas barrier layer 120 and the first sealant layer 132 before the sealant layer 130 is fractured, there is a problem in that sealing strength of the pouch type battery case is reduced.

A ratio (B/A) of the elastic modulus (B) of the second sealant layer 134 to the elastic modulus (A) of the first sealant layer 132 is in a range of 0.65 or more to less than 1.0, particularly 0.8 or more to less than 1.0, and more particularly 0.9 or more to less than 1.0. In a case in which the elastic modulus ratio (B/A) between the sealant layers satisfies the above numerical range, since possibility of interlayer delamination at an interface between the first sealant layer 132 and the second sealant layer 134 is reduced during the application of the tensile stress and the deformation due to the tensile stress is not concentrated in the first sealant layer 132, but is distributed to the second sealant layer 134 having mechanical strength above a certain level, higher pouch sealing strength than a conventional case may be achieved.

In order to adjust physical properties of the first sealant layer 132 and/or the second sealant layer 134 to desired values, an additive may be added to a polymer material constituting the first sealant layer 132. Specifically, a flexibility additive may be added as an additive for decreasing the elastic modulus of the first sealant layer 132. The flexibility additive may be at least one selected from the group consisting of linear low density polyethylene (LLDPE), polybutene, and a polyethylene (PE)-polypropylene (PP)-polybutene (PB) terpolymer, but is not limited thereto. As an additive for increasing the elastic modulus of the first sealant layer 132, for example, at least one of carbon fibers, glass fibers, and aramid fibers may be added.

In order to adjust the physical properties of the first sealant layer 132 and/or the second sealant layer 134 to desired values, an additive may be added to the polymer materials constituting the first sealant layer 132 and/or the second sealant layer 134. Specifically, a flexibility additive may be added as an additive for decreasing the elastic moduli of the first sealant layer 132 and/or the second sealant layer 134. The flexibility additive may be at least one selected from the group consisting of linear low density polyethylene (LLDPE), polybutene, and a polyethylene (PE)-polypropylene (PP)-polybutene (PB) terpolymer, but is not limited thereto. As an additive for increasing the elastic moduli of the first sealant layer 132 and/or the second sealant layer 134, for example, at least one of carbon fibers, glass fibers, and aramid fibers may be added.

Also, in order to control the elastic modulus of the first sealant layer 132 and/or the second sealant layer 134, molecular weight and/or melt flow rate (MFR) of the polymer contained in the first sealant layer 132 and/or the second sealant layer 134 may be varied. For example, the elastic modulus of the first sealant layer 132 and/or the second sealant layer 134 may be increased if the molecular weight of the polymer contained in the first sealant layer 132 and/or the second sealant layer 134 is increased or the melt flow rate is decreased. Also, the elastic modulus of the first sealant layer 132 and/or the second sealant layer 134 may be decreased if the molecular weight of the polymer contained in the first sealant layer 132 and/or the second sealant layer 134 is decreased or the melt flow rate is increased.

Hereinafter, each of the above-described first sealant layer 132 and second sealant layer 134 will be described in more detail.

### 1) First Sealant Layer

The first sealant layer 132 may be formed of a polymer material. Specifically, the first sealant layer 132 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon, and may preferably be formed of a polyolefin-based resin such as polypropylene (PP) and/or polyethylene (PE). In this case, the polypropylene (PP) may be composed of cast polypropylene (CPP), acid modified polypropylene (PPa), or a polypropylene-butylene-ethylene terpolymer.

In order to ensure long-term adhesion between the gas barrier layer 120 and the first sealant layer 132, it is particularly desirable that the first sealant layer 132 is formed of acid modified polypropylene (PPa). Herein, the acid modified polypropylene may be maleic anhydride polypropylene (MAH PP).

The first sealant layer 132 may have an elastic modulus of 600 MPa or less, particularly 200 MPa to 500 MPa, and more particularly 250 MPa to 480 MPa. In a case in which the elastic modulus of the first sealant layer 132 satisfies the above numerical range, interfacial delamination between the gas barrier layer 120 and the first sealant layer 132 is suppressed because the first sealant layer 132 is not easily deformed, and the adhesion between the gas barrier layer 120 and the first sealant layer 132 may be maintained high because the first sealant layer 132 is easily attached to the gas barrier layer 120. Also, since the first sealant layer 132 has appropriate flexibility and impact resistance, insulation performance of the pouch type battery case may be maintained.

The first sealant layer 132 may have a thickness of 10 µm to 90 µm, particularly 10 µm to 60 µm, and more particularly 10 µm to 40 µm. In a case in which the thickness of the first sealant layer 132 is smaller than 10 µm, since sealing durability and insulation properties of the pouch type battery case prepared from the pouch film laminate are reduced and yield strength of the first sealant layer 132 is reduced, there is a problem in that the sealing strength of the pouch type battery case is reduced. Also, there is a problem in that it is difficult to extrude the first sealant layer to a uniform thickness through an extrusion process. In a case in which the thickness of the first sealant layer 132 is greater than 90 µm, there is a problem in that the energy density of the pouch type secondary battery is decreased due to an increase in thickness of the pouch film laminate relative to a total thickness of the pouch type secondary battery.

According to an embodiment of the present invention, the first sealant layer 132 may be a layer that is in direct contact with the gas barrier layer 120. In this case, the first sealant layer 132 may be directly adhered to the gas barrier layer 120 if the pouch film laminate 100 is co-extruded. In another example, an adhesive layer and/or a skin layer may be disposed between the first sealant layer 132 and the gas barrier layer 120 to improve the adhesion between the first sealant layer 132 and the gas barrier layer 120.

### 2) Second Sealant Layer

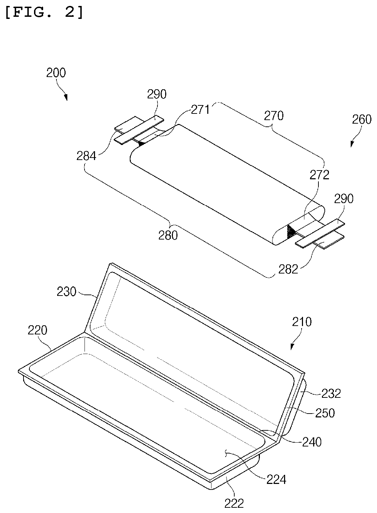

The second sealant layer 134 may be formed of a material having insulation properties, corrosion resistance, and sealing properties. Specifically, since the second sealant layer 134 is in direct contact with an electrode assembly (260 in FIG. 2) and/or the electrolyte inside an accommodation space (224 in FIG. 2), it may be formed of a material having insulation properties and corrosion resistance. Also, since the second sealant layer 134 completely seals the inside of the battery case to block material movement between the inside/the outside, it may be formed of a material having high sealing properties. To ensure such insulation properties, corrosion resistance, and sealing properties, the second sealant layer 134 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon. Preferably, the second sealant layer 134 may be formed of a polyolefin-based resin such as polypropylene (PP) and/or polyethylene (PE). In this case, the polypropylene may be composed of cast polypropylene, acid modified polypropylene, a polypropylene-ethylene copolymer, and/or a polypropylene-butylene-ethylene terpolymer. Herein, the acid modified polypropylene may be maleic anhydride polypropylene (MAH PP). More preferably, the second sealant layer may include cast polypropylene (CPP) having high tensile strength as well as heat sealability.

The second sealant layer 134 may have an elastic modulus of 200 MPa or more, particularly 200 MPa to 400 MPa, and more particularly 250 MPa to 380 MPa. In a case in which the elastic modulus of the second sealant layer 134 satisfies the above numerical range, interfacial delamination between the first sealant layer 132 and the second sealant layer 134 is suppressed, and sealing durability of the pouch type battery case may be secured by reducing possibility of fracture occurring along a pair of the second sealant layers 134 sealed in the pouch type battery case that is prepared from the pouch film laminate. Also, since mechanical strength of the second sealant layer 134 is sufficiently secured to sufficiently withstand stress, the sealing durability of the pouch type battery case may be ensured.

The second sealant layer 134 may have a thickness of 10 µm to 90 µm, particularly 10 µm to 60 µm, and more particularly 10 µm to 50 µm. In a case in which the thickness of the second sealant layer 134 is smaller than 10 µm, since the sealing durability and insulation properties of the pouch type battery case prepared from the pouch film laminate are reduced and yield strength of the second sealant layer 134 is reduced, there is a problem in that the sealing strength of the pouch type battery case is reduced. In a case in which the thickness of the second sealant layer 134 is greater than 90 µm, there is a problem in that the energy density of the pouch type secondary battery is decreased due to the increase in thickness of the pouch film laminate relative to the total thickness of the pouch type secondary battery.

The second sealant layer 134 may be disposed to be in direct contact with the first sealant layer 132, or may be disposed not to be in direct contact with the first sealant layer 132. In a case in which the second sealant layer 134 and the first sealant layer 132 are not in direct contact with each other, the pouch film laminate may further include at least one layer disposed between the first sealant layer 132 and the second sealant layer 134. For example, an intermediate layer (not shown) may be disposed between the first sealant layer 132 and the second sealant layer 134 to improve insulation properties of the pouch film laminate. The intermediate layer may include at least one of polypropylene and homopolypropylene. The intermediate layer may have a thickness of 80 µm or less, particularly 10 µm to 60 µm, and more particularly 30 µm to 50 µm. In a case in which the thickness of the intermediate layer satisfies the above numerical range, excellent sealing strength may be secured while co-extrusion formability of the sealant layer is improved.

### Pouch Type Secondary Battery

Next, a pouch type secondary battery according to the present invention will be described.

The pouch type secondary battery according to the present invention includes a pouch type battery case prepared by forming the above-described pouch film laminate, and an electrode assembly accommodated in the pouch type battery case. Specifically, the pouch type secondary battery according to the present invention includes a pouch type battery case in which an electrode assembly is accommodated, the pouch type battery case is prepared by forming a pouch film laminate, and the pouch film laminate includes a base material layer, a gas barrier layer, a first sealant layer, and a second sealant layer which are sequentially laminated, wherein an elastic modulus of the first sealant layer is greater than an elastic modulus of the second sealant layer.

Hereinafter, each configuration of the pouch type secondary battery of the present invention will be described in more detail with reference to FIG. 2.

FIG. 2 is an exploded assembly view of a pouch type secondary battery 200 according to the present invention. As illustrated in FIG. 2, the pouch type secondary battery 200 of the present invention may include a pouch type battery case 210, an electrode assembly 260, an electrode lead 280, an insulating portion 290, and an electrolyte (not shown).

### (1) Pouch Type Battery Case

The pouch type battery case 210 may be prepared by forming the above-described pouch film laminate of the present invention. The pouch type battery case 210 may accommodate the electrode assembly 260 inside. Since detailed configuration and physical properties of the pouch film laminate are the same as described above, a detailed description is omitted.

The pouch film laminate may be drawn and stretched by a punch or the like to prepare the pouch type battery case 210. As a result, the pouch type battery case 210 may include a cup portion 222 and an accommodation portion 224. The accommodation portion 224 is a place to accommodate the electrode assembly, wherein it may mean an accommodation space which is formed in a pocket shape inside the cup portion 222 as the cup portion 222 is formed.

According to an embodiment of the present invention, the pouch type battery case 210 may include a first case 220 and a second case 230 as illustrated in FIG. 2. The first case 220 includes the accommodation portion 224 capable of accommodating the electrode assembly 260, and the second case 230 may cover the accommodation portion 224 from the top so that the electrode assembly 260 is not separated to the outside of the battery case 210. The first case 220 and the second case 230 may be prepared by connecting one sides thereof to each other as illustrated in FIG. 2, but the present invention is not limited thereto and the first case 220 and the second case 230 may be prepared in various ways, for example, the first case 220 and the second case 230 are separated from each other and prepared separately.

According to another embodiment of the present invention, in a case in which the cup portion is formed on the pouch film laminate, the two symmetrical cup portions 222 and 232 may be drawn adjacent to each other on one pouch film laminate. In this case, as illustrated in FIG. 2, the cup portions 222 and 232 may be formed in the first case 220 and the second case 230, respectively. After the electrode assembly 260 is accommodated in the accommodation portion 224 provided in the cup portion 222 of the first case 220, a bridge portion 240 formed between the two cup portions 222 and 232 may be folded so that the two cup portions 222 and 232 face each other. In this case, the cup portion 232 of the second case 230 may accommodate the electrode assembly 260 from above. Thus, since the two cup portions 222 and 232 accommodate the one electrode assembly 260, the electrode assembly 260 having a thickness greater than that when the cup portion 222 is one may be accommodated. Also, since one edge of the secondary battery 200 is formed by folding the pouch type battery case 210, the number of edges to be sealed may be reduced when a sealing process is performed later. Accordingly, a process speed of the pouch type secondary battery 200 may be improved, and the number of sealing processes may be reduced.

The pouch type battery case 210 may be sealed in a state in which it accommodates the electrode assembly 260 so that a portion of an electrode lead 280 to be described later, that is, a terminal portion, is exposed. Specifically, when the electrode lead 280 is connected to an electrode tab 270 of the electrode assembly 260 and the insulating portion 290 is formed in the portion of the electrode lead 280, the electrode assembly 260 is accommodated in the accommodation portion 224 provided in the cup portion 222 of the first case 220, and the second case 230 may cover the accommodation portion 224 from the top. Subsequently, an electrolyte is injected in the accommodation portion 224 and a sealing portion 250 formed on edges of the first case 220 and the second case 230 may be sealed.

The sealing portion 250 may act to seal the accommodation portion 224. Specifically, the sealing portion 250 may seal the accommodation portion 224 while being formed along an edge of the accommodation portion 224. Temperature at which the sealing portion 250 is sealed may be in a range of 180°C to 250°C, particularly 200°C to 250°C, and more particularly 210°C to 240°C. In a case in which the sealing temperature satisfies the above numerical range, the pouch type battery case 210 may secure sufficient sealing strength by thermal bonding.

### (2) Electrode Assembly

The electrode assembly 260 may be inserted into the pouch type battery case 210 and may be sealed by the pouch type battery case 210 after the injection of the electrolyte.

The electrode assembly 260 may be formed by sequentially stacking a positive electrode, a separator, and a negative electrode. Specifically, the electrode assembly 260 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 260 may be prepared in a predetermined shape by stacking the positive electrode and the negative electrode on both sides of the separator. Types of the electrode assembly 260 may include a stacked type, a jelly-roll-type, and a stack and folding type, but are not limited thereto.

The electrode assembly 260 may include the electrode tab 270.

The electrode tab 270 is connected to each of the positive electrode and the negative electrode of the electrode assembly 260 and protrudes from the electrode assembly 260 to the outside so that it may be a path through which electrons may move between the inside and the outside of the electrode assembly 260. The electrode current collector included in the electrode assembly 260 may be composed of a portion to which the electrode active material is applied and an end portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 2, the electrode tabs 270 may protrude in different directions of the electrode assembly 260, respectively, but are not limited thereto and may be formed to protrude in various directions, for example, the electrode tabs 270 protrude side by side from one side of the electrode assembly 260 in the same direction.

### (3) Electrode Lead

The electrode lead 280 may supply electricity to the outside of the secondary battery 200. The electrode lead 280 may be connected to the electrode tab 270 of the electrode assembly 260 by spot welding or the like.

The electrode lead 280 is connected to the electrode assembly 260 and may protrude to the outside of the pouch type battery case 210 via the sealing portion 250. Specifically, one end of the electrode lead 280 is connected to the electrode assembly 260, especially the electrode tab 270, and the other end of the electrode lead 280 may protrude to the outside of the pouch type battery case 210.

The electrode lead 280 may include a positive electrode lead 282, which has one end connected to a positive electrode tab 272 and extends in a protruding direction of the positive electrode tab 272, and a negative electrode lead 284 which has one end connected to a negative electrode tab 271 and extends in a protruding direction of the negative electrode tab 271. The other ends of both of the positive electrode lead 282 and the negative electrode lead 284 may protrude to the outside of the battery case 210. Accordingly, the electricity generated inside the electrode assembly 260 may be supplied to the outside. Also, since the positive electrode tab 272 and the negative electrode tab 271 are formed to respectively protrude in various directions, the positive electrode lead 282 and the negative electrode lead 284 may also respectively extend in various directions. Materials of the positive electrode lead 282 and the negative electrode lead 284 may be different from each other. That is, the positive electrode lead 282 may be formed of an aluminum (Al) material that is the same as the positive electrode collector, and the negative electrode lead 284 may be formed of a copper (Cu) material or nickel (Ni)-coated copper material that is the same as the negative electrode collector. Since a portion of the electrode lead 280 protruding to the outside of the battery case 210 becomes a terminal portion, it may be electrically connected to an external terminal.

### (4) Insulating Portion

The insulating portion 290 prevents flow of the electricity generated from the electrode assembly 260 to the battery case 210 through the electrode lead 280, and may maintain sealing of the battery case 210. For this purpose, the insulating portion 290 may be formed of an insulator having non-conductivity which does not conduct electricity well. In general, as the insulating portion 290, an insulating tape or film, which is easy to be attached to the electrode lead 280 and is relatively thin, is widely used, but the present invention is not limited thereto and any member capable of insulating the electrode lead 280 may be used.

The insulating portion 290 may be disposed to surround an outer circumferential surface of the electrode lead 280. Specifically, at least a portion of the electrode lead 280 may be surrounded by the insulating portion 290. In this case, the insulating portion 290 may be disposed between the electrode lead 280 and the pouch type battery case 210. The insulating portion 290 may be limitedly located at the sealing portion 250 to which the first case 220 and the second case 230 of the pouch type battery case 210 are thermally fused, and may adhere the electrode lead 280 to the battery case 210.

### (5) Electrolyte

The pouch type secondary battery 200 according to the present invention may further include an electrolyte (not shown) that is injected into the pouch type battery case 210. The electrolyte is for moving lithium ions that are generated by an electrochemical reaction of the electrode during charge/discharge of the secondary battery 200, wherein it may include a non-aqueous organic electrolyte solution, as a mixture of a lithium salt and organic solvents, or a polymer using a polymer electrolyte. Furthermore, the electrolyte may include a sulfide-based, oxide-based, or polymer-based solid electrolyte, and the solid electrolyte may have flexibility to be easily deformed by an external force.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Examples and Comparative Examples

### Example 1: Preparation of Pouch Film Laminate

A first adhesive film having a thickness of 3 µm, a nylon film having a thickness of 25 µm, a second adhesive film having a thickness of 3 µm, and a polyethylene terephthalate (PET) film having a thickness of 12 µm were sequentially laminated on one surface of an aluminum alloy thin film having a thickness of 60 µm. An acid modified polypropylene (PPa) film having a thickness of 40 µm and a polypropylene (PP) film having a thickness of 40 µm were co-extruded on the other surface of the aluminum alloy thin film. As a result, a pouch film laminate having a structure, in which the polypropylene film/the acid modified polypropylene film/the aluminum alloy thin film/the first adhesive film/the nylon film/the second adhesive film/the polyethylene terephthalate film were sequentially laminated, was prepared.

Herein, the polypropylene film (second sealant layer) and the acid modified polypropylene film (first sealant layer) were a sealant layer, the aluminum alloy thin film was a gas barrier layer, and the first adhesive film, the nylon film, the second adhesive film, and the polyethylene terephthalate film were a base material layer.

In order to control elastic moduli of the polypropylene film and the acid modified polypropylene film, linear low-density polyethylene (LLDPE) was added as a flexibility additive during the preparation of each film.

### Example 2: Preparation of Pouch Film Laminate

A pouch film laminate was prepared in the same manner as in Example 1 except that an amount of the linear low-density polyethylene (LLDPE) added to the acid modified polypropylene film was increased in order to reduce the elastic modulus of the acid modified polypropylene film (first sealant layer).

### Example 3: Preparation of Pouch Film Laminate

An amount of the linear low-density polyethylene (LLDPE) added to the acid modified polypropylene film was increased in order to reduce the elastic modulus of the acid modified polypropylene film (first sealant layer). A pouch film laminate was prepared in the same manner as in Example 1 except that the acid modified polypropylene film having a thickness of 30 µm, a polypropylene film (intermediate layer) having a thickness of 30 µm, and a polypropylene film having a thickness of 20 µm were co-extruded on the other surface of the aluminum alloy thin film.

### Example 4: Preparation of Pouch Film Laminate

An amount of the linear low-density polyethylene (LLDPE) added to the acid modified polypropylene film was increased in order to reduce the elastic modulus of the acid modified polypropylene film (first sealant layer). A pouch film laminate was prepared in the same manner as in Example 1 except that the acid modified polypropylene film having a thickness of 20 µm, a polypropylene film (intermediate layer) having a thickness of 50 µm, and a polypropylene film having a thickness of 10 µm were co-extruded on the other surface of the aluminum alloy thin film.

### Example 5: Preparation of Pouch Film Laminate

An amount of the linear low-density polyethylene (LLDPE) added to the acid modified polypropylene film was increased in order to reduce the elastic modulus of the acid modified polypropylene film (first sealant layer). A pouch film laminate was prepared in the same manner as in Example 1 except that the acid modified polypropylene film having a thickness of 20 µm, a polypropylene film (intermediate layer) having a thickness of 50 µm, and a polypropylene film having a thickness of 10 µm were co-extruded on the other surface of the aluminum alloy thin film.

### Example 6: Preparation of Pouch Film Laminate

A pouch film laminate was prepared in the same manner as in Example 1 except that an amount of the linear low-density polyethylene (LLDPE) added to the acid modified polypropylene film was increased in order to reduce the elastic modulus of the acid modified polypropylene film (first sealant layer).

### Example 7: Preparation of Pouch Film Laminate

An amount of the linear low-density polyethylene (LLDPE) added to the acid modified polypropylene film was increased in order to reduce the elastic modulus of the acid modified polypropylene film (first sealant layer). A pouch film laminate was prepared in the same manner as in Example 1 except that the acid modified polypropylene film having a thickness of 20 µm, a polypropylene film (intermediate layer) having a thickness of 50 µm, and a polypropylene film having a thickness of 10 µm were co-extruded on the other surface of the aluminum alloy thin film.

### Example 8: Preparation of Pouch Film Laminate

Polypropylene film and acid modified polypropylene film with a high melt flow rate (MFR) were used in order to reduce the elastic moduli of the acid modified polypropylene film (first sealant layer) and the polypropylene film (second sealant layer). A pouch film laminate was prepared in the same manner as in Example 1 except that the acid modified polypropylene film having a thickness of 30 µm and the polypropylene film having a thickness of 50 µm were co-extruded on the other surface of the aluminum alloy thin film.

### Example 9: Preparation of Pouch Film Laminate

An acid modified polypropylene film with a high melt flow rate (MFR) was used in order to reduce the elastic modulus of the acid modified polypropylene film (first sealant layer). A pouch film laminate was prepared in the same manner as in Example 1 except that the acid modified polypropylene film having a thickness of 30 µm and a polypropylene film having a thickness of 50 µm were co-extruded on the other surface of the aluminum alloy thin film.

### Comparative Example 1: Preparation of Pouch Film Laminate

An acid modified polypropylene film with a high melt flow rate (MFR) was used in order to reduce the elastic modulus of the acid modified polypropylene film (first sealant layer), and a pouch film laminate was prepared in the same manner as in Example 1 except that an amount of the linear low-density polyethylene (LLDPE) added to the acid modified polypropylene film was increased.

### Comparative Example 2: Preparation of Pouch Film Laminate

An amount of the linear low-density polyethylene (LLDPE) added to the acid modified polypropylene film was increased in order to reduce the elastic modulus of the acid modified polypropylene film (first sealant layer). An amount of the linear low-density polyethylene (LLDPE) added to the polypropylene film was decreased in order to increase the elastic modulus of the polypropylene film (intermediate layer). A pouch film laminate was prepared in the same manner as in Example 3 except that a polypropylene film with a low melt flow rate (MFR) was used in order to increase the elastic modulus of the polypropylene film (second sealant layer).

### Comparative Example 3: Preparation of Pouch Film Laminate

A pouch film laminate was prepared in the same manner as in Example 1 except that an acid modified polypropylene film with a high melt flow rate (MFR) was used in order to reduce the elastic modulus of the acid modified polypropylene film (first sealant layer).

### Comparative Example 4: Preparation of Pouch Film Laminate

An amount of the linear low-density polyethylene (LLDPE) added to the acid modified polypropylene film was increased in order to reduce the elastic modulus of the acid modified polypropylene film (first sealant layer). A pouch film laminate was prepared in the same manner as in Example 1 except that a polypropylene film with a low melt flow rate (MFR) was used in order to increase the elastic modulus of the polypropylene film (second sealant layer).

### Comparative Example 5: Preparation of Pouch Film Laminate

A pouch film laminate was prepared in the same manner as in Example 1 except that an amount of the linear low-density polyethylene (LLDPE) added to the acid modified polypropylene film was increased in order to reduce the elastic modulus of the acid modified polypropylene film (first sealant layer).

### Comparative Example 6: Preparation of Pouch Film Laminate

An amount of the linear low-density polyethylene (LLDPE) added to the acid modified polypropylene film was increased in order to reduce the elastic modulus of the acid modified polypropylene film (first sealant layer). An amount of the linear low-density polyethylene (LLDPE) added to the polypropylene film was decreased in order to increase the elastic modulus of the polypropylene film (intermediate layer). A pouch film laminate was prepared in the same manner as in Example 3 except that a polypropylene film with a low melt flow rate (MFR) was used in order to increase the elastic modulus of the polypropylene film (second sealant layer).

### Comparative Example 7: Preparation of Pouch Film Laminate

A pouch film laminate was prepared in the same manner as in Example 1 except that an amount of the linear low-density polyethylene (LLDPE) added to the acid modified polypropylene film was decreased in order to increase the elastic modulus of the acid modified polypropylene film (first sealant layer).

### Comparative Example 8: Preparation of Pouch Film Laminate

A pouch film laminate was prepared in the same manner as in Example 1 except that amounts of the linear low-density polyethylene (LLDPE) added to the acid modified polypropylene film and the polypropylene film were increased in order to reduce the elastic moduli of the acid modified polypropylene film (first sealant layer) and the polypropylene film (second sealant layer), respectively.

### Experimental Example 1: Measurement of Elastic Modulus of the Sealant Layer Included in the Pouch Film Laminate

In the pouch film laminates respectively prepared in Examples 1 to 9 and Comparative Examples 1 to 8, an elastic modulus in a thickness direction of each layer included in the sealant layer was measured using a compressive elastic modulus tester (Micro-indenter). Specifically, one surface of each layer included in the sealant layer was indented to a depth of 10 µm at an indentation loading rate of 0.1 N/min using a probe of the micro-indenter. The elastic modulus was calculated from a stress-strain graph obtained in this case and presented in Table 1 below.

**[Table 1]**

| | Sealant layer thickness (µm) | | | Sealant layer elastic modulus (100%=310 MPa) | | | Second sealant layer elastic modulus / First sealant layer elastic modulus |
|---|---|---|---|---|---|---|---|
| | First sealant layer | Inter mediate layer | Second sealant layer | First sealant layer | Inter mediate layer | Second sealant layer | |
| Example 1 | 40 | - | 40 | 180% | - | 120% | 0.67 |
| Example 2 | 40 | - | 40 | 160% | - | 120% | 0.75 |
| Example 3 | 30 | 30 | 20 | 160% | 80% | 120% | 0.75 |
| Example 4 | 20 | 50 | 10 | 160% | 80% | 120% | 0.75 |
| Example 5 | 20 | 50 | 10 | 150% | 80% | 120% | 0.80 |
| Example 6 | 40 | - | 40 | 140% | - | 120% | 0.86 |
| Example 7 | 20 | 50 | 10 | 140% | 80% | 120% | 0.86 |
| Example 8 | 30 | - | 50 | 100% | - | 90% | 0.90 |
| Example 9 | 30 | - | 50 | 130% | - | 120% | 0.92 |
| Comparative Example 1 | 40 | - | 40 | 100% | - | 120% | 1.20 |
| Comparative Example 2 | 30 | 30 | 20 | 80% | 120% | 150% | 1.88 |
| Comparative Example 3 | 40 | - | 40 | 120% | - | 120% | 1.00 |
| Comparative Example 4 | 40 | - | 40 | 120% | - | 150% | 1.25 |
| Comparative Example 5 | 40 | - | 40 | 110% | - | 120% | 1.09 |
| Comparative Example 6 | 30 | 30 | 20 | 120% | 120% | 150% | 1.25 |
| Comparative Example 7 | 40 | - | 40 | 190% | - | 120% | 0.63 |
| Comparative Example 8 | 40 | - | 40 | 160% | - | 100% | 0.63 |

### Experimental Example 2: Measurement of Sealing Strength of the Pouch Type Battery Case

The pouch film laminates, which had been respectively prepared in Examples 1 to 9 and Comparative Examples 1 to 8, were prepared. Thereafter, after each pouch film laminate was cut to a size of 266 mm in width and 200 mm in length and then folded in half to a size of 133 mm × 200 mm such that the sealant layers were in contact with each other, a pouch type battery case was prepared by sealing an end of a long side (200 mm) for 1.6 seconds at a seal bar area of 200 mm × 8 mm, 210°C, and a surface pressure of 1.0 MPa to 2.0 MPa.

Next, the prepared pouch type battery case was cut to a width of 15 mm to include a sealing portion. One end of each of the pouch film laminates, which were stacked up and down in a cut sample, was bent and fastened to an upper/lower jig of measurement equipment (UTM, Zwick), and was then pulled at a speed of 5 mm/min in a vertical direction (180° direction) at a temperature of 25°C to measure a maximum value of tensile strength when the sealing portion was fractured. Measurement results are presented in Table 2 below.

**[Table 2]**

| | Sealing strength at 25°C (kgf/15mm) |
|---|---|
| Example 1 | 13.1 |
| Example 2 | 12.6 |
| Example 3 | 14.3 |
| Example 4 | 13.6 |
| Example 5 | 14.5 |
| Example 6 | 14.0 |
| Example 7 | 15.7 |
| Example 8 | 14.2 |
| Example 9 | 16.3 |
| Comparative Example 1 | 5.8 |
| Comparative Example 2 | 7.8 |
| Comparative Example 3 | 7.6 |
| Comparative Example 4 | 8.6 |
| Comparative Example 5 | 7.5 |
| Comparative Example 6 | 9.8 |
| Comparative Example 7 | 8.7 |
| Comparative Example 8 | 8.0 |

According to Tables 1 and 2, with respect to Examples 1 to 9 in which the elastic modulus of the first sealant layer was greater than the elastic modulus of the second sealant layer, it may be confirmed that sealing strengths measured at a temperature of 25°C were significantly higher than those of Comparative Examples 1 to 8.

### (Description of the Symbols)

100: Pouch Film Laminate
110: Base Material Layer
120: Gas Barrier Layer
130: Sealant Layer
132: First Sealant Layer
134: Second Sealant Layer
200: Pouch Type Secondary Battery
210: Pouch Type Battery Case
220: First Case
222: Cup Portion
224: Accommodation Portion
230: Second Case
232: Cup Portion
240: Bridge Portion
250: Sealing Portion
260: Electrode Assembly
270: Electrode Tab
271: Negative Electrode Tab
272: Positive Electrode Tab
280: Electrode Lead
282: Positive Electrode Lead
284: Negative Electrode Lead
290: Insulating Portion

## Claims

1. A pouch film laminate comprising:
a base material layer, a gas barrier layer, a first sealant layer, and a second sealant layer which are sequentially laminated,
wherein an elastic modulus of the first sealant layer is greater than an elastic modulus of the second sealant layer.

2. The pouch film laminate of claim 1, wherein a ratio (B/A) of the elastic modulus (B) of the second sealant layer to the elastic modulus (A) of the first sealant layer is in a range of 0.65 or more to less than 1.0.

3. The pouch film laminate of claim 1, wherein the elastic modulus of the first sealant layer is 600 MPa or less.

4. The pouch film laminate of claim 1, wherein the elastic modulus of the second sealant layer is 200 MPa or more.

5. The pouch film laminate of claim 1, wherein the first sealant layer is in direct contact with the gas barrier layer.

6. The pouch film laminate of claim 1, wherein the second sealant layer is in direct contact with the first sealant layer.

7. The pouch film laminate of claim 1, further comprising at least one layer disposed between the first sealant layer and the second sealant layer.

8. The pouch film laminate of claim 1, wherein the first sealant layer has a thickness of 10 µm to 90 µm.

9. The pouch film laminate of claim 1, wherein the second sealant layer has a thickness of 10 µm to 90 µm.

10. The pouch film laminate of claim 1, wherein the first sealant layer comprises acid modified polypropylene (PPa).

11. The pouch film laminate of claim 1, wherein the second sealant layer comprises polypropylene (PP).

12. The pouch film laminate of claim 1, wherein the gas barrier layer has a thickness of 30 µm to 100 µm.

13. The pouch film laminate of claim 1, wherein the gas barrier layer comprises aluminum.

14. A pouch type battery case which is prepared by forming the pouch film laminate of any one of claims 1 to 13.

15. A pouch type secondary battery comprising:
a pouch type battery case prepared by forming the pouch film laminate of any one of claims 1 to 13; and
an electrode assembly accommodated in the pouch type battery case.
